# EUROPEAN PATENT APPLICATION

(11) **EP 4 660 488 A1**
(43) Date of publication of application: **10.12.2025**
(21) Application number: 24780745.6
(22) Date of filing: 28.03.2024
(51) Int. Cl.: F16K 3/314

(54) **SPOOL VALVE**

(30) Priority: 31.03.2023 JP 2023056968
(71) Applicant: Sumitomo Precision Products Co., Ltd., Hyogo 660-0891 (JP)
(72) Inventor: MASUTANI Kazuhiro, Amagasaki-shi, Hyogo 660-0891 (JP)
(74) Representative: BRP Renaud & Partner mbB Rechtsanwälte Patentanwälte Steuerberater
(86) International application number: PCT/JP2024/012898
(87) International publication number: WO 2024/204647

(57) **Abstract**

A spool valve (1) includes: a spool (2); a housing (3) that houses the spool so as to allow the spool to reciprocate along an axis (X); and an electric device (4) that switches the hydraulic fluid path by moving the spool along the axis. The spool includes a first end face (24) that is perpendicular to the axis. The housing includes a stopping surface (35) that positions the spool in a neutral position by abutting against the first end face of the spool. Either one or both of the first end face and the stopping surface have one or more projections or recesses.

## Description

### TECHNICAL FIELD

The technique disclosed herein relates to spool valves.

### BACKGROUND ART

Patent Document 1 discloses a hydraulic supply device including a spool valve. The spool of the spool valve is biased toward a neutral position by a spring. When hydraulic fluid is supplied to a pressure regulating port connected to a pressure regulating circuit, the spool moves from the neutral position to a second position against the biasing force of the spring.

### CITATION LIST

### PATENT DOCUMENTS

PATENT DOCUMENT 1: Japanese Unexamined Patent Application Publication No. 2017-125576

### SUMMARY OF THE INVENTION

### TECHNICAL PROBLEM

In recent years, electrification has been progressing in the technical field of moving objects, including aircraft. Even for spool valves that switch the hydraulic fluid path, consideration has been given to adopting spool valves in which the spool is moved by an electric device such as an electric motor, instead of conventional hydraulically operated spool valves.

However, the inventors have found that, in a spool valve equipped with an electric device, a phenomenon in which the spool does not move may occur even though the electric device has the capability to move the spool.

The technique disclosed herein enables stable operation of a spool valve equipped with an electric device.

### SOLUTION TO THE PROBLEM

In a spool valve equipped with an electric device, the capability of the electric device is set on the assumption that equal hydraulic loads act on both a first side of the spool and a second side opposite from the first side. That is, the hydraulic loads acting on the spool in the direction of movement of the spool normally substantially cancel each other out.

However, according to studies conducted by the inventors, it has been found that there are cases where the hydraulic load acting on the first side of the spool and the hydraulic load acting on the second side become unbalanced. The inventors have discovered that this phenomenon is caused by a condition in which, when a first end face on the first side of the spool is in contact with a stopping surface of the housing, it is difficult for hydraulic fluid to be supplied between the first end face and the stopping surface or it takes a long time for the hydraulic fluid to be supplied therebetween.

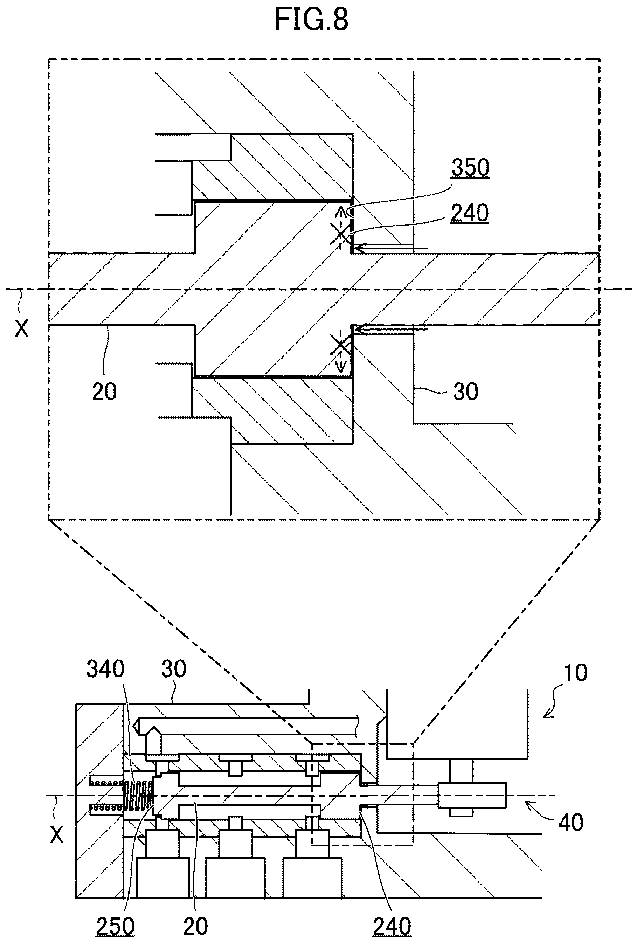

FIG. 8 illustrates a spool valve 10 equipped with an electric device 40. A spool 20 is housed in a housing 30 such that it can reciprocate in a direction along an axis X. The spool 20 extends in the direction along the axis X. A hydraulic load acting on a first side (i.e., the right side in FIG. 8) of the spool 20 and a hydraulic load acting on a second side (i.e., the left side in FIG. 8) are basically equal.

The electric device 40 is connected to a first end face 240 of the spool 20. A spring 340 is located at a second end face 250 of the spool 20. The spring 340 biases the spool 20 in the direction toward the first side. The electric device 40 pushes the spool 20 in the direction toward the second side against the biasing force of the spring 340.

As shown in the enlarged view in FIG. 8, in the spool valve 10, the spool 20 is positioned in the neutral position by the first end face 240 of the spool 20 and a stopping surface 350 of the housing 30 being brought into abutment with each other by the biasing force of the spring 340. In order to ensure the positional accuracy of the neutral position, the flat surfaces of the first end face 240 and the stopping surface 350, which are perpendicular to the axis X, are brought into contact with each other.

In a case where the machining accuracy of the first end face 240 and the stopping surface 350 is high, the flat surfaces perpendicular to the axis X come into close contact with each other across the entire areas of the first end face 240 and the stopping surface 350, resulting in an extremely small gap between the first end face 240 and the stopping surface 350.

In a case where the gap between the first end face 240 and the stopping surface 350 is extremely small, it is difficult for hydraulic fluid to be supplied into the gap or it takes a long time for the hydraulic fluid to be supplied into the gap (see the dashed arrows in FIG. 8). As a result, the hydraulic load acting on the first side of the spool 20 and the hydraulic load acting on the second side become unbalanced. In this case, the hydraulic load acting on the second side is greater than the hydraulic load acting on the first side. When the electric device 40 attempts to move the spool 20 from the neutral position to a second position, the electric device 40 must move the spool 20 not only against the biasing force of the spring 340 and the friction acting on the spool 20 during movement of the spool 20, but also against the difference between the hydraulic loads acting on the spool 20. The spool 20 therefore does not move due to the insufficient capability of the electric device 40.

In the conventional spool valve described in the aforementioned patent document, even if the hydraulic loads acting on both sides of the spool are unbalanced, the spool can be moved by supplying high hydraulic pressure to the pressure regulating port. In conventional spool valves that use hydraulic pressure, the imbalance between the hydraulic loads acting on both sides of the spool had not been recognized as a technical problem.

In a case where the spool valve is a spool valve for use in an aircraft, an aircraft takes off and lands in, for example, regions where the ambient temperature exceeds 50°C, and flies at high altitudes where the ambient temperature drops to extreme lows below -50°C. A spool valve mounted on an aircraft is used in a temperature range that is significantly wider than that for spool valves used in general environments. Due to the wide temperature range in which it is used, the viscosity of hydraulic fluid varies significantly, ranging from low viscosity to high viscosity.

Studies conducted by the inventors have revealed that the aforementioned phenomenon in which the spool does not move becomes significant when the temperature of hydraulic fluid is low. This is believed to be because, when the temperature of hydraulic fluid drops, its viscosity increases, which makes it even more difficult for the hydraulic fluid to be supplied between the first end face and the stopping surface, or results in a longer time required for the supply of the hydraulic fluid therebetween.

One possible approach to address the phenomenon in which the spool does not move is to increase the capability of the electric device. However, an electric device with greater capability leads to an increase in size of the spool valve. A large spool valve is disadvantageous as a spool valve to be mounted on a moving object.

Accordingly, in view of the cause of the phenomenon in which the spool does not move, the inventors adopted a structure in which hydraulic fluid is more easily supplied between the first end face and the stopping surface, thereby enabling the spool valve to operate stably. Specifically, since the cause of the malfunction lies in the fact that the flat surfaces are in close contact with each other across the entire areas of the first end face and the stopping surface, the inventors adopted, in the spool valve, a structure in which a gap through which hydraulic fluid flows is formed between the first end face and the stopping surface.

Specifically, the technology disclosed herein relates to a spool valve that switches a hydraulic fluid path. The spool valve includes:
a spool;
a housing having a sleeve bore into which the spool is inserted, and housing the spool so as to allow the spool to reciprocate along an axis; and
an electric device connected to the spool and switching the hydraulic fluid path by moving the spool along the axis.

The spool includes a first end face on a first side in a direction along the axis, the first end face being perpendicular to the axis.

The housing includes a stopping surface perpendicular to the axis, the stopping surface abutting against the first end face of the spool.

Either one or both of the first end face and the stopping surface have one or more projections or recesses.

The first end face of the spool and the stopping surface of the housing, each of which is a surface perpendicular to the axis, are configured to abut against each other. For example, the first end face of the spool and the stopping surface of the housing may abut against each other when the spool is in a neutral position.

Either one or both of the first end face and the stopping surface have one or more projections or recesses. These projections or recesses make it less likely for the flat surfaces of the first end face and the stopping surface to come into close contact with each other across the entire areas of the first end face and the stopping surface, resulting in a partial gap between the first end face and the stopping surface. These projections or recesses include, for example, features that extend through the surface, such as slits.

When the first end face of the spool and the stopping surface of the housing are in abutment with each other, hydraulic fluid is supplied between the first end face and the stopping surface through the gap formed between the first end face and the stopping surface. Even when the temperature of the hydraulic fluid drops and its viscosity increases, the hydraulic fluid is still supplied between the first end face and the stopping surface.

As a result, the hydraulic load acting on the first side of the spool and the hydraulic load acting on a second side opposite from the first side become equal or substantially equal. Since the hydraulic loads acting on the spool in the direction along the axis substantially cancel each other out, the spool can be moved without increasing the capability of the electric device. Accordingly, the spool valve operates stably. In addition, the spool valve does not become large in size.

Either one or both of the first end face and the stopping surface may be provided with a recessed portion recessed from the first end face or the stopping surface.

The recessed portion recessed from the first end face and/or the stopping surface forms a gap without closely contacting the stopping surface and/or the first end face. Hydraulic fluid is supplied between the first end face and the stopping surface through the recessed portion.

At locations on the first end face and the stopping surface where no recessed portion is formed, flat portions come into contact with each other. In a case where the neutral position of the spool is defined by the abutting state between the first end face and the stopping surface, contact between the flat portions enables the neutral position of the spool to be accurately determined.

Either one or both of the first end face and the stopping surface may be provided with a protruding portion protruding from the first end face or the stopping surface.

The protruding portion protruding from the first end face and/or the stopping surface comes into contact with a flat portion of the stopping surface and/or the first end face. Accordingly, a gap is formed at locations on the first end face and the stopping surface where no protruding portion is formed. Hydraulic fluid is supplied between the first end face and the stopping surface through the gap.

In a case where the neutral position of the spool is defined by the abutting state between the first end face and the stopping surface, contact between the protruding portion and the flat portion enables the neutral position of the spool to be accurately determined.

A shim interposed between the first end face and the stopping surface may be fixed to the first end face or the stopping surface.

Since the shim fixed to the first end face or the stopping surface comes into contact with the stopping surface or the first end face, a gap is formed between the first end face and the stopping surface. Hydraulic fluid is supplied between the first end face and the stopping surface through the gap.

In a case where the neutral position of the spool is defined by the abutting state between the first end face and the stopping surface, contact between the shim and the stopping surface or the first end face enables the neutral position of the spool to be accurately determined.

The shim may have a notch extending in a direction perpendicular to the axis.

The notch forms a gap extending in the direction perpendicular to the axis between the first end face and the stopping surface in a case where the first end face and the stopping surface abut against each other. The gap extending in the direction perpendicular to the axis facilitates the supply of hydraulic fluid between the first end face and the stopping surface.

The spool valve may further include a spring that biases the spool toward the neutral position by abutting against a second end face opposite from the first end face in the direction along the axis.

The electric device may be connected to the first end face of the spool and may move the spool in a direction in which the first end face and the stopping surface move away from each other, against a biasing force of the spring.

As described above, since the hydraulic loads acting on the spool in the direction along the axis substantially cancel each other out, the electric device only needs to output a force that counteracts the biasing force of the spring and the friction acting on the moving spool. Since the capability of the electric device can be set to the minimum necessary capability, the electric device can be reduced in size, and the spool valve can also be reduced in size.

The spool valve may be of a double-acting type including a first electric device connected to the first end face of the spool and a second electric device connected to the second end face thereof. In this configuration, the housing may include a first stopping surface abutting against the first end face of the spool and a second stopping surface abutting against the second end face of the spool, either one or both of the first end face and the first stopping surface may have one or more projections or recesses, and either one or both of the second end face and the second stopping surface may have one or more projections or recesses.

Since hydraulic fluid is easily supplied into both the gap between the first end face and the first stopping surface and the gap between the second end face and the second stopping surface, the hydraulic load acting on the first end face of the spool and the hydraulic load acting on the second end face thereof become equal or substantially equal. The double-acting spool valve thus operates stably.

The spool valve may be for use in an aircraft.

Since a spool valve for an aircraft is used in a wide temperature range, the spool valve may be used in a state in which the viscosity of the hydraulic fluid is significantly high. The above-described spool valve allows the hydraulic fluid to be stably supplied between the first end face and the stopping surface even when the viscosity of the hydraulic fluid is high. Accordingly, the spool valve operates stably. The above-described spool valve is suitable as a spool valve for use in an aircraft.

### ADVANTAGES OF THE INVENTION

The above-described spool valve equipped with the electric device operates stably.

### BRIEF DESCRIPTION OF THE DRAWINGS

[FIG. 1] FIG. 1 is a sectional view of a spool valve.
[FIG. 2] FIG. 2 is an enlarged sectional view of the spool valve.
[FIG. 3] FIG. 3 is a perspective view of a spool.
[FIG. 4] FIGS. 4A, 4B, and 4C illustrate modifications of the spool.
[FIG. 5] FIGS. 5A, 5B, and 5C illustrate modifications of the spool.
[FIG. 6] FIGS. 6A and 6B illustrate a modification of the spool valve, where FIG. 6B is a cross-sectional view taken along line b-b in FIG. 6A.
[FIG. 7] FIG. 7 illustrates a modification of the spool valve.
[FIG. 8] FIG. 8 illustrates a conventional spool valve.

### DESCRIPTION OF EMBODIMENTS

An embodiment of a spool valve will now be described below with reference to the drawings. The spool valve described herein is merely illustrative.

### (Overall Configuration of Spool Valve)

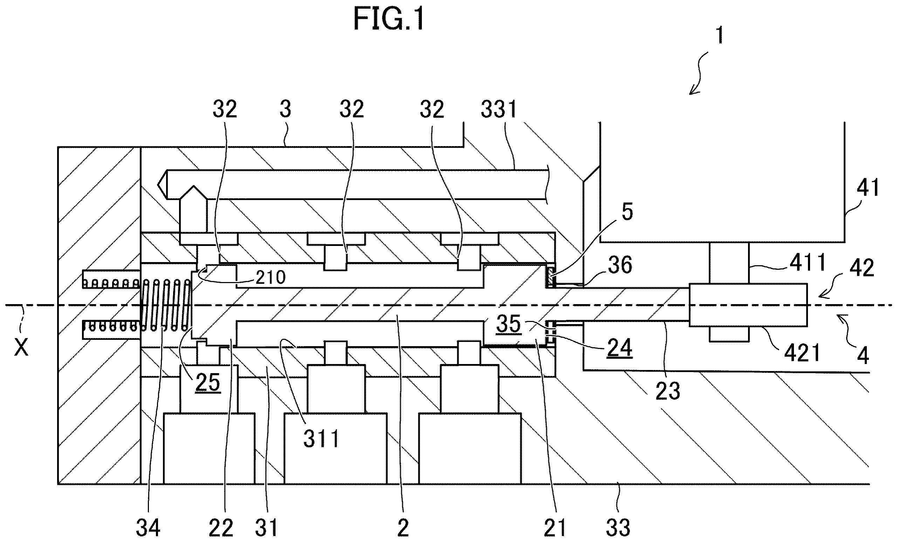

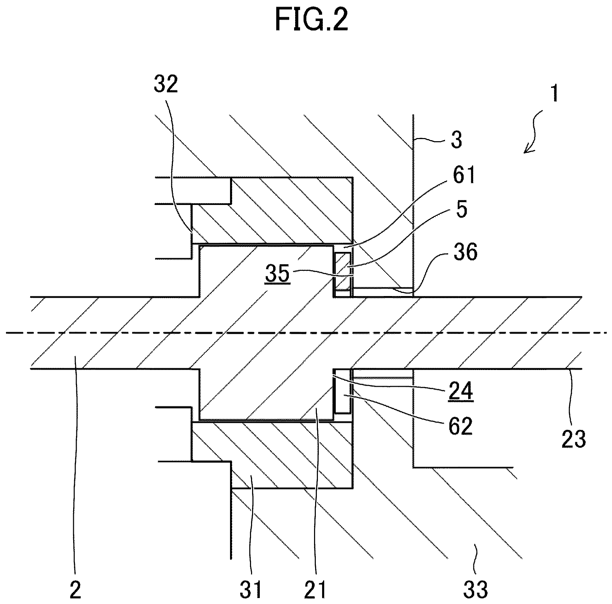

FIGS. 1 and 2 illustrate a spool valve 1. For example, the spool valve 1 is used as a switching valve that switches the hydraulic fluid path in a hydraulic circuit mounted in an aircraft. However, the application of the spool valve 1 is not limited to aircraft. The spool valve 1 may also be mounted on various moving objects such as automobiles or railway vehicles.

The spool valve 1 includes a spool 2, a housing 3, and an electric device 4.

The housing 3 houses the spool 2. The housing 3 includes a sleeve 31 and a housing body 33. The sleeve 31 has a sleeve bore 311 extending along an axis X. A plurality of ports 32 is formed in the sleeve 31. The plurality of ports 32 is arranged in a direction along the axis X. The plurality of ports 32 communicates with the sleeve bore 311.

The sleeve 31 may be omitted, and a sleeve bore extending along the axis X and ports may be formed in the housing body 33.

The housing body 33 holds the sleeve 31. The housing body 33 has an oil passage 331 configured to communicate with the ports 32. The housing body 33 supports a spring 34. The spring 34 expands and contracts in the direction along the axis X.

The spool 2 is inserted into the sleeve bore 311. The spool 2 extends along the axis X. The spool 2 can reciprocate along the axis X within the sleeve bore 311.

The spool 2 includes a first land 21 and a second land 22. The first land 21 and the second land 22 each have an outer diameter corresponding to the inner diameter of the sleeve bore 311. The first land 21 is located at a first end of the spool 2, and the second land 22 is located at a second end of the spool 2. The first end of the spool 2 is the right end in FIG. 1, and the second end of the spool 2 is the end opposite from the first end, i.e., the left end in FIG. 1. As the spool 2 reciprocates along the axis X, the first land 21 and the second land 22 open and close the plurality of ports 32. This allows the spool valve 1 to switch the hydraulic fluid path.

The second land 22 of the spool 2 has a second end face 25. The second end face 25 is a surface of the second land 22 on the side of the spring 34, and is a surface perpendicular to the axis X. In the spool 2 of the illustrated example, the outer diameter of the second end face 25 is smaller than the outer diameter of the second land 22, and as shown in FIG. 1, a step 210 is formed around the outer periphery of the second end face 25. The spring 34 described above abuts against the second end face 25. The spring 34 biases the spool 2 to the right in FIG. 1.

The first land 21 of the spool 2 has a first end face 24. The first end face 24 is a surface of the first land 21 on the side opposite from the spring 34, and is a surface perpendicular to the axis X.

The housing 3 has a stopping surface 35. The stopping surface 35 is a surface perpendicular to the axis X, and is a surface with which the first end face 24 comes into abutment. In a case where the spring 34 biases the spool 2 to the right in FIG. 1, the first end face 24 comes into abutment with the stopping surface 35, whereby further rightward movement of the spool 2 is restricted. The position of the spool 2 where the first end face 24 and the stopping surface 35 are in abutment with each other is the neutral position of the spool 2. The spring 34 biases the spool 2 so that the spool 2 is positioned in the neutral position.

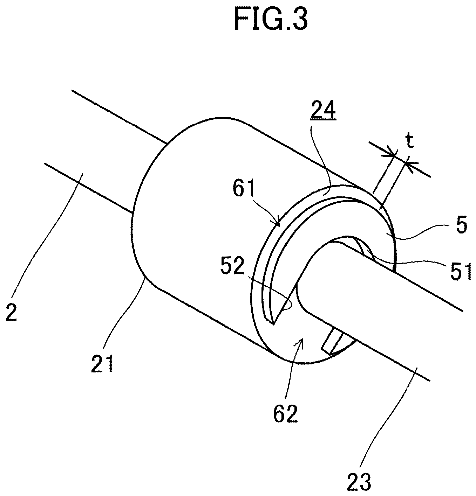

A rod 23 is connected to the first land 21 of the spool 2. More specifically, the rod 23 is connected to the first end face 24. Accordingly, as shown in FIG. 3, the first end face 24 has an annular shape.

In the direction along the axis X, the pressure receiving area on the first side of the spool 2 is made equal to the pressure receiving area on the second side thereof. The pressure receiving area on the first side is the sum of the area of the annular first end face 24 and the area of the end face of the rod 23 (which is a surface contacted by a cam 421 described later), and the pressure receiving area on the second side is the sum of the area of the circular second end face 25 and the area of the step 210 formed around the outer periphery of the second end face 25. Accordingly, the hydraulic load acting on the first side of the spool 2 becomes equal to the hydraulic load acting on the second side, and the hydraulic loads acting on the spool 2 in the direction along the axis X substantially cancel each other out.

The spool 2 and the rod 23 are integrated. The rod 23 extends from the first end face 24 in a direction opposite from the spring 34. The rod 23 protrudes out of the sleeve bore 311 through a through hole 36 formed in the stopping surface 35.

The electric device 4 includes an electric motor 41 and a conversion mechanism 42. The conversion mechanism 42 converts the torque of the electric motor 41 into movement of the spool 2 in the direction along the axis X. Specifically, the conversion mechanism 42 includes a cam 421 mounted on a shaft 411 of the electric motor 41. The shaft 411 extends in a direction perpendicular to the axis X. The cam 421 is in contact with the end of the rod 23. In a case where the electric motor 41 is driven and the cam 421 rotates, and the lobe of the cam 421 moves toward the spring 34, the lobe of the cam 421 pushes the rod 23 toward the spring 34. As a result, the spool 2 moves toward the spring 34 against the biasing force of the spring 34 and the friction acting on the moving spool 2. In a case where the cam 421 further rotates and the lobe of the cam 421 moves in the direction opposite from the spring 34, the spool 2 moves in the direction opposite from the sprint 34 by the biasing force of the spring 34. In this manner, the spool 2 reciprocates along the axis X within the sleeve bore 311.

The electric device 4 is not limited to the combination of the electric motor 41 and the conversion mechanism 42 described above. The conversion mechanism 42 is also not limited to the mechanism using the cam 421.

### (Structure of First End Face)

As shown in FIGS. 2 and 3, the first end face 24 of the spool valve 1 has one or more projections or recesses. More specifically, a shim 5 is fixed to the first end face 24. The shim 5 is a flat plate having a predetermined thickness t and a diameter smaller than that of the first end face 24. The shim 5 has an insertion hole 51 into which the rod 23 of the spool 2 is inserted, and a notch 52 extending in the radial direction and connecting to the insertion hole 51. The overall shape of the shim 5 is a C-shape.

The shim 5 is fixed to the first end face 24. This allows the surface of the shim 5 to come into direct contact with the stopping surface 35 when the spool 2 is biased by the spring 34 (see also FIG. 2). Accordingly, when the spool 2 is in the neutral position, a gap 61 extending along the peripheral edge of the first end face 24 is formed between the first end face 24 and the stopping surface 35, and a gap 62 extending in the radial direction of the first end face 24 is formed at the location of the notch 52. Further, the insertion hole 51 communicates with the through hole 36.

As shown in FIG. 8, in a case where the flat surfaces of the first end face 240 and the stopping surface 350 are in close contact with each other across the entire areas of the first end face 240 and the stopping surface 350, it is difficult for hydraulic fluid to be supplied between the first end face 240 and the stopping surface 350 or it takes a long time for the hydraulic fluid to be supplied therebetween.

In contrast, as shown in FIG. 2, in a case where one or more projections or recesses are provided by interposing the shim 5 between the first end face 24 and the stopping surface 35, hydraulic fluid can be more easily supplied between the first end face 24 and the stopping surface 35 via the gaps 61, 62 formed between the first end face 24 and the stopping surface 35, through the through hole 36.

As a result, the hydraulic load acting on the first side of the spool 2 and the hydraulic load acting on the second side become equal or substantially equal, and the force with which the first end face 24 is pressed against the stopping surface 35 is reduced. Accordingly, the electric device 4 can stably move the spool 2.

Even when the temperature of the hydraulic fluid drops and its viscosity increases, the hydraulic fluid is still supplied between the first end face 24 and the stopping surface 35, or is supplied promptly therebetween. The spool valve 1 thus operates stably even at low temperatures. The spool valve 1 is useful as a spool valve 1 for use in an aircraft.

Moreover, since the force with which the first end face 24 is pressed against the stopping surface 35 is reduced, it is sufficient for the electric device 4 to have the capability to overcome the biasing force of the spring 34 and the resistance to movement of the spool 2. Accordingly, a smaller electric motor 41 can be employed in the spool valve 1. As a result, the spool valve 1 can be reduced in size. A small spool valve 1 is suitable for use in various moving objects, including aircraft.

### (Modifications)

The shim 5 described above may be fixed to the stopping surface 35 of the housing 3, instead of being fixed to the first end face 24 of the spool 2. Alternatively, a structure similar to that obtained by fixing the shim 5 to the first end face 24 may be formed in the spool 2 by machining the first end face 24 of the spool 2 into the shape shown in FIG. 3.

The shape of the shim 5 is not limited to the C-shape shown in FIG. 3. However, the notch 52 extending in the radial direction forms, between the first end face 24 and the stopping surface 35, the gap 62 that extends in a direction perpendicular to the axis X and that is continuous, via the insertion hole 51, with the through hole 36 of the housing 3. Therefore, hydraulic fluid is promptly supplied between the first end face 24 and the stopping surface 35.

The technology disclosed herein is characterized in that either one or both of the first end face 24 and the stopping surface 35 have one or more projections or recesses, and these projections or recesses form, between the first end face 24 and the stopping surface 35, a gap through which hydraulic fluid flows. These projections or recesses can be formed without the shim 5.

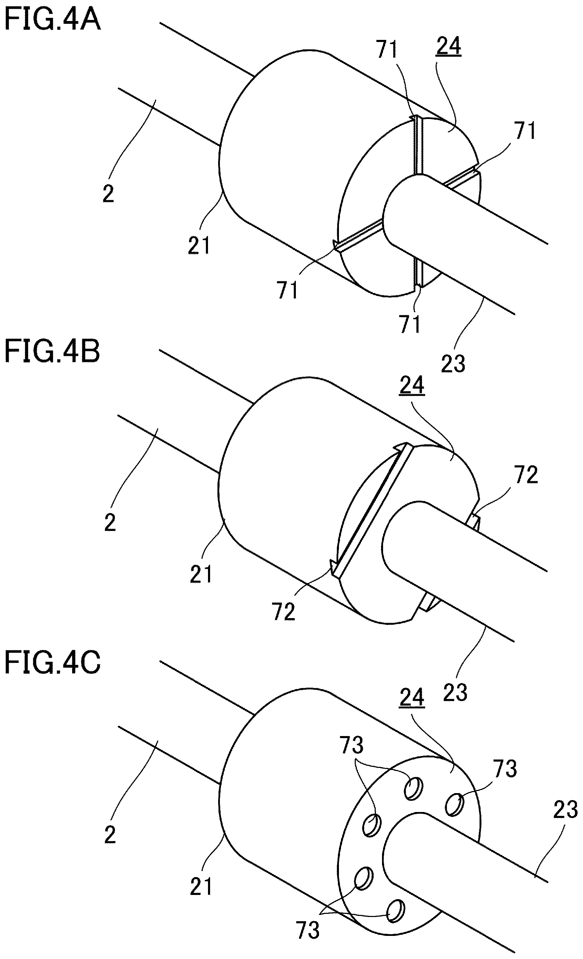

Instead of interposing the shim 5 between the first end face 24 and the stopping surface 35, a recessed portion recessed from the first end face 24, for example, may be formed in the first end face 24, as shown in FIGS. 4A-4C. The recessed portion may have various shapes.

For example, as illustrated in FIG. 4A, a plurality of grooves 71 extending in the radial direction of the first end face 24 may be formed in a radial pattern. The recessed portion is not limited to the plurality of grooves formed in a radial pattern. For example, as illustrated in FIG. 4B, one or more grooves 72 extending in one specific direction may be formed in the first end face 24. One or more grooves extending in the circumferential direction may be formed in the first end face 24. A plurality of grooves extending in random directions may be formed in the first end face 24.

As illustrated in FIG. 4C, a plurality of recesses 73 may be formed spaced apart in the circumferential direction of the first end face 24.

The recessed portion may have a shape other than those illustrated in FIGS. 4A-4C.

The recessed portions 71, 72, 73 formed in the first end face 24 form gaps without contacting the stopping surface 35 when the first end face 24 and the stopping surface 35 are in abutment with each other. Hydraulic fluid is supplied between the first end face 24 and the stopping surface 35 through the recessed portions 71, 72, 73.

At locations on the first end face 24 and the stopping surface 35 where the recessed portions 71, 72, 73 are not formed, flat portions come into contact with each other. This enables the neutral position of the spool 2 to be accurately determined.

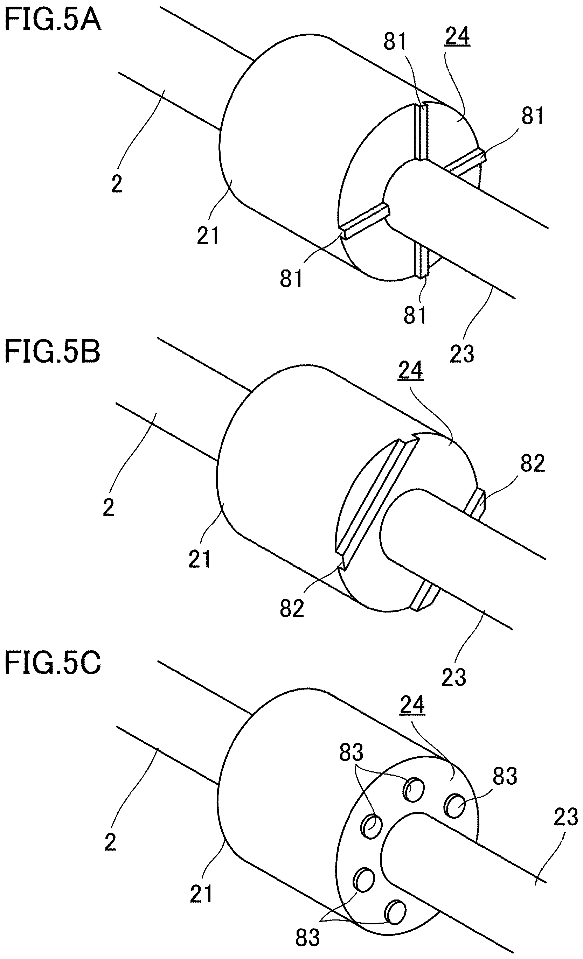

Instead of forming the recessed portions 71, 72, 73 in the first end face 24, a protruding portion that protrudes from the first end face 24, for example, may be formed on the first end face 24, as shown in FIGS. 5A-5C. The protruding portion may have various shapes.

For example, as illustrated in FIG. 5A, a plurality of ridges 81 extending in the radial direction of the first end face 24 may be formed in a radial pattern. The protruding portion is not limited to the plurality of ridges formed in a radial pattern. For example, as illustrated in FIG. 5B, one or more ridges 82 extending in one specific direction may be formed on the first end face 24. One or more ridges extending in the circumferential direction may be formed on the first end face 24. A plurality of ridges extending in random directions may be formed on the first end face 24.

As illustrated in FIG. 5C, a plurality of protrusions 83 may be formed spaced apart in the circumferential direction of the first end face 24.

The protruding portion may have a shape other than those illustrated in FIGS. 5A-5C.

The protruding portions 81, 82, 83 formed on the first end face 24 come into contact with the stopping surface 35. Accordingly, gaps are formed at locations on the first end face 24 and the stopping surface 35 where the protruding portions are not formed. Hydraulic fluid is supplied between the first end face 24 and the stopping surface 35 through these gaps.

The neutral position of the spool 2 is accurately determined by the contact between the protruding portions 81, 82, 83 and the stopping surface 35.

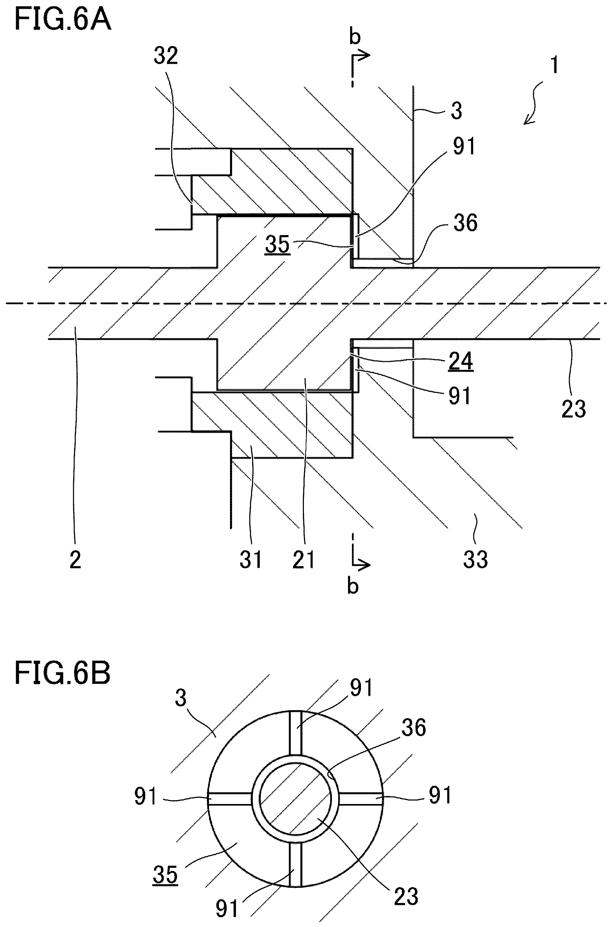

Instead of the first end face 24 of the spool 2 having one or more projections or recesses, the stopping surface 35 of the housing 3 may have one or more projections or recesses. For example, as shown in FIGS. 6A and 6B, as a recessed portion formed in the stopping surface 35, a plurality of grooves 91 extending in the radial direction may be formed in a radial pattern in the stopping surface 35. The grooves 91 may be connected to the through hole 36.

The recessed portion formed in the stopping surface 35 may have various shapes, as shown in FIGS. 4A, 4B, and 4C configured. The protruding portions shown in FIGS. 5A, 5B, or 5C may be formed on the stopping surface 35.

Both the first end face 24 and the stopping surface 35 may have one or more projections or recesses. However, since the first end face 24 and the stopping surface 35 define the neutral position of the spool 2, it is preferable that the first end face 24 and the stopping surface 35 at least partially come into contact with each other via their flat portions.

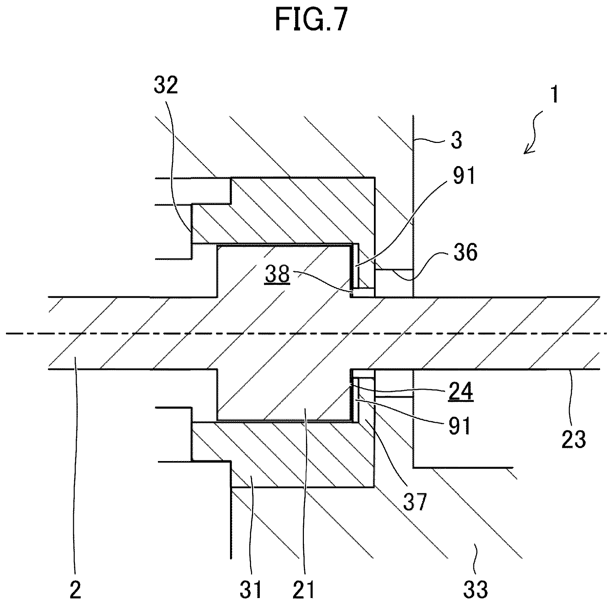

In the spool valve 1 shown in FIGS. 1 and 2, the housing body 33 has the stopping surface 35. However, for example, as illustrated in FIG. 7, in a case where the sleeve 31 has a cover portion 37 that closes the opening at its end, the cover portion 37 forms a stopping surface 38 configured to abut against the first end face 24 of the spool 2. In this case, for example, grooves 91 similar to those in FIG. 6 or various types of recessed portions/protruding portions may be formed on the stopping surface 38 of the cover portion 37. A shim 5 may be fixed to the stopping surface 38 of the cover portion 37.

Instead of forming various types of recessed portions/protruding portions on the stopping surface 38 of the cover portion 37, various types of recessed portions/protruding portions may be formed on the first end face 24, or a shim 5 configured to come into contact with the stopping surface 38 may be fixed to the first end face 24.

The spool valve may be of a double-acting type. A double-acting spool valve includes a second electric device instead of the spring 34. The second electric device is connected to the second end face 25 of the spool 2. The housing 3 includes, in addition to the (first) stopping surface 35 abutting against the first end face 24 of the spool 2, a second stopping surface abutting against the second end face 25 of the spool 2. The double-acting spool valve may be configured so that either one or both of the first end face 24 and the first stopping surface 35 have one or more projections or recesses and either one or both of the second end face 25 and the second stopping surface have one or more projections or recesses. Since hydraulic fluid can be easily supplied into the gap between the first end face 24 and the first stopping surface 35 and the gap between the second end face 25 and the second stopping surface, the hydraulic load acting on the first end face 24 of the spool 2 and the hydraulic load acting on the second end face 25 become equal or substantially equal. The double-acting spool valve therefore operates stably.

### DESCRIPTION OF REFERENCE CHARACTERS

- 1: Spool Valve
- 2: Spool
- 24: First End Face
- 25: Second End Face
- 3: Housing
- 311: Sleeve Bore
- 34: Spring
- 35: Stopping Surface
- 4: Electric Device
- 5: Shim
- 52: Notch
- 71: Groove (Recessed Portion)
- 72: Groove (Recessed Portion)
- 73: Recess (recessed Portion)
- 81: Ridge (Protruding Portion)
- 82: Ridge (Protruding Portion)
- 83: Protrusion (Protruding Portion)
- 91: Groove (Recessed Portion)
- X: Axis

## Claims

1. A spool valve that switches a hydraulic fluid path, the spool valve comprising:
a spool;
a housing having a sleeve bore into which the spool is inserted, and housing the spool so as to allow the spool to reciprocate along an axis; and
an electric device connected to the spool and switching the hydraulic fluid path by moving the spool along the axis, wherein
the spool includes a first end face on a first side in a direction along the axis, the first end face being perpendicular to the axis,
the housing includes a stopping surface perpendicular to the axis, the stopping surface abutting against the first end face of the spool, and
either one or both of the first end face and the stopping surface have one or more projections or recesses.

2. The spool valve according to claim 1, wherein
either one or both of the first end face and the stopping surface are provided with a recessed portion recessed from the first end face or the stopping surface.

3. The spool valve according to claim 1, wherein
either one or both of the first end face and the stopping surface are provided with a protruding portion protruding from the first end face or the stopping surface.

4. The spool valve according to claim 1, wherein
a shim interposed between the first end face and the stopping surface is fixed to the first end face or the stopping surface.

5. The spool valve according to claim 4, wherein
the shim has a notch extending in a direction perpendicular to the axis.

6. The spool valve according to any one of claims 1 to 5, further comprising:
a spring that biases the spool toward a neutral position by abutting against a second end face opposite from the first end face in the direction along the axis, wherein
the electric device is connected to the first end face of the spool and moves the spool in a direction in which the first end face and the stopping surface move away from each other, against a biasing force of the spring.

7. The spool valve according to any one of claims 1 to 6, wherein
the spool valve is for use in an aircraft.
